# EUROPEAN PATENT SPECIFICATION

(11) **EP 3 238 549 B1**
(45) Date of publication and mention of the grant of the patent: **06.03.2024**
(21) Application number: 15872761.0
(22) Date of filing: 11.12.2015
(51) Int. Cl.: A23L 7/113

(54) **DRIED NOODLES AND PRODUCTION METHOD THEREOF**
GETROCKNETE NUDELN UND HERSTELLUNGSVERFAHREN DAFÜR
NOUILLES SÉCHÉES ET LEUR PROCÉDÉ DE PRODUCTION

(30) Priority: 24.12.2014 JP 2014261377
(43) Date of publication of application: 01.11.2017
(73) Proprietor: Sanyo Foods Co., Ltd., Minato-ku, Tokyo 107-0052 (JP)
(72) Inventor: NAGAYAMA, Yoshiaki, Tokyo 107-0052 (JP)
(74) Representative: Krauns, Christian
(86) International application number: PCT/JP2015/084824
(87) International publication number: WO 2016/104192

(56) References cited:
- WO-A1-2014/002573
- JP-A- S5 971 658
- JP-A- 2006 122 020
- JP-A- 2007 068 533
- JP-A- 2014 132 839
- DATABASE WPI Week 201028 Thomson Scientific, London, GB; AN 2010-C41561 XP002780494, & CN 101 647 525 A (UNIV SOUTH CHINA TECHNOLOGY) 17 February 2010 (2010-02-17)
- DATABASE WPI Week 200772 Thomson Scientific, London, GB; AN 2007-768081 XP002780495, & JP 2007 238893 A (SANWA DENPUN KOGYO KK) 20 September 2007 (2007-09-20)
- DATABASE WPI Week 201104 Thomson Scientific, London, GB; AN 2011-A54529 XP002780496, & JP 2011 000013 A (NISSEI SEIFUN KK) 6 January 2011 (2011-01-06)

## Description

### TECHNICAL FIELD

The present invention relates to dried noodles and a production method thereof, and more particularly, to high-temperature air-dried instant dried noodles and a production method thereof.

### BACKGROUND ART

Methods of drying instant dried noodles consist of deep-frying drying and non-frying drying. Examples of non-frying drying methods generally include hot air drying, microwave drying, freeze drying and cold air drying. Raw materials contain wheat flour and starch, and lye water in the case of Chinese noodles or polymeric polyphosphate in the case of Japanese style noodles, optionally with the addition of dietary salt, powdered egg, polysaccharide thickener, oils and fats, lecithin and other ingredients. The raw materials are mixed and kneaded followed by noodle making according to common procedures, steaming and/or boiling the noodles and then drying according to a prescribed drying method to obtain deep-fried noodles or non-fried noodles.

Methods of preparing these instant dried noodles for eating is generally classified into two types consisting of preparing by boiling in a pot and preparing by adding hot water onto the dried noodles. In the case of the type of preparing by boiling in a pot, due to the quantity of heat applied to the noodles during the preparation thereof, the hot water is able to quickly reach the inside of the noodle strings enabling starch granules to expand adequately. Consequently, dried noodles prepared by this type tend to be able to achieve a comparatively resilient texture. On the other hand, in the case of the type of preparing by adding hot water onto dried noodles (to be referred to as the "snack noodles"), since the quantity of heat applied to the noodles during preparation is small both in the case of deep-fried noodles and non-fried noodles, the amount of time required for the hot water to reach the inside of the noodle strings ends up being prolonged, thereby preventing starch granules within the noodle strings from expanding quickly. Consequently, unless snack noodles are processed to have a flat, thin shape, the reconstitutability (restorability) of the noodles is poor and texture tends to be hard.

The following indicates characteristics of deep-frying drying and non-frying drying that are commonly known as methods of drying instant dried noodles.

Deep-frying drying is characterized in that, due to rapid dehydration of the noodles by deep-frying treatment, the internal structure of the dried noodle strings is a porous structure, which enables the noodles to be ready to eat within a short period of time after having hot water poured thereon or after boiling in water. However, since noodles obtained by this method have a porous structure, they tend to be excessively soft and have a brittle texture, resulting in difficulty to provide a satisfactory sense of fillingness.

In addition, the two commonly known non-frying drying methods of low-temperature hot air drying and high-temperature hot air drying are characterized in the manner indicated below.

In the case of low-temperature hot air drying, moisture present in noodles can be dried slowly due to the use of hot air at a drying temperature of under 100 °C. Consequently, the structure of the noodle strings is dense free of air bubbles, thereby making it possible to reproduce a comparatively resilient texture at the time of eating after preparation. On the other hand, the dense structure of the noodle strings results in difficulty in penetrating moisture inside the noodle strings during preparation.

In the case of high-temperature hot air drying, which was devised to eliminate the shortcomings of low-temperature hot air drying, the drying temperature is 100 °C or higher and the flow rate of the hot air is roughly 10 m/sec, enabling the noodle strings to be dried by rapidly evaporating water contained in the noodles at a temperature higher than the boiling point of water. When noodle strings are dried by high-temperature hot air drying, the noodle strings are foamed and swollen by rapid evaporation of water, resulting in a porous structure similar to that of deep-fried noodles. Consequently, in comparison with low-temperature hot air drying, it is easier for moisture to penetrate inside the noodle strings during preparation, or in other words, it allows noodle strings to have favorable reconstitutability (restorability). However, similar to deep-frying drying, noodle strings obtained by high-temperature hot air drying tend to be excessively soft and have a brittle texture attributable to the porous structure thereof in comparison with noodle strings obtained by low-temperature hot air drying, and in particular in the form of snack noodles, could not achieve the chewy texture associated with fresh noodles.

Moreover, there is also a problem of the occurrence of "noodle string cracking" during high-temperature hot air drying. "Noodle string cracking" refers to a phenomenon in which drying on the surface of noodle strings proceeds to a greater degree than in the center of the noodle strings when the noodle strings are dried for a short period of time at a high temperature, thereby causing uneven contraction within the noodle strings due to a difference in moisture content between the surface and central portions of the noodle strings, which causes large voids to form in the central portion of the noodle strings. Moreover, noodle strings in which this "noodle string cracking" has occurred end up separating into two portions starting from the center thereof at the time of eating. Once "noodle string cracking" occurs, texture considerably decreases and appearance becomes poor, thereby significantly impairing product value. Since "noodle string cracking" occurs more frequently in thicker noodle strings, the thickness of noodle strings of instant dried noodles was limited so as to be able to be produced by high-temperature hot air drying. It was particularly difficult to produce thick instant non-fried noodles, such as udon wheat noodles, by high-temperature hot air drying. When large voids form within noodle strings, even if the noodle strings do not separate in appearance at the time of eating, the noodles are excessively soft and have a brittle texture, thereby being unable to achieve the chewy texture associated with fresh noodles.

There are several conventional technologies employed as means for solving the problem of "noodle string cracking" during high-temperature hot air drying.

Patent Document 1 (Japanese Patent No. 4671663) describes a method of producing instant noodles comprising: preparing noodle strings from a mixture obtained by mixing and kneading a noodle raw material containing a main raw material and an oil or fat and/or emulsifier having a particle diameter of 0.15 mm or greater, and water, and steaming and/or boiling the noodle strings followed by swelling and drying by using hot air at a temperature of 110 °C or higher, wherein the main raw material is selected from the group consisting of wheat flour, durum flour, buckwheat flour, barley flour and starch, the standard deviation of the noodle string cross-section in the lengthwise direction when measured by randomly selecting five strings of the instant noodles from the same product is 0.3 or less, and the added amount of the powdered granular oil or fat or emulsifier is 0.5 % to 5 % based on the main raw material.

Patent Document 2 (Japanese Patent No. 5153964) describes dried noodles having a porous structure and a degree of gelatinization of 30 % to 75 %, wherein the porosity of the cross-sectional area of the noodles is 0.1 % to 15 % and the unit porosity of the cross-sectional area of the noodles is 0.01 % to 1 %, and a method of producing dried noodles having a final degree of gelatinization of 30 % to 75 %, comprising: foaming and drying an uncooked noodle body formed from a noodle dough containing a main raw material and 100 % oil-derived powdered oil or fat at greater than 0.5 % by weight to less than 6 % by weight based on the total weight of the main raw material, at 90 °C to 150 °C.

The CN 101 647 525 A discloses a rice flour mixture comprising esterified crosslinked potato starch, soybean polysaccharide and other additives, which can be used for the preparation of rice noodles.

The JP 2007/238893 A discloses a modified starch having a specific viscosity, and a raw material for the modified starch, such as rice starch, waxy rice starch, corn starch, waxy corn starch, wheat starch, barley starch, potato starch, pea starch, sweet potato starch, and tapioca starch, and those starches are subjected to chemical modifications, such as esterification, etherification, crosslinking; heat humidity treatment; aging, etc., as a raw material for the modified starch.

The JP 2011/000013 A discloses a retort udon, the udon containing wheat gluten, phosphate-crosslinked starch and wheat flour.

The WO 2014/002573 A1 discloses a starch material that is useful in improving food texture. This starch, a 16 mass% suspension of which, said suspension having been adjusted to pH 3.0, shows no breakdown in acidic amylographic analysis, is used as an active ingredient of a food texture-improving agent. This starch is a phosphate crosslinked starch.

The JP 2007/068533 A discloses a method for producing noodles having a good recoverability in hot water. The method comprises: a process for adding water to a starch raw material comprising 80 to 95 pts.wt. of beta starch and 20 to 5 pts.wt. of alpha starch to prepare a dough; a process for kneading and forming the obtained dough under vacuum; a process for converting the formed noodles into alpha starch noodles; and a process for drying the alpha starch noodles. The alpha starch is prepared from cross-linked starch and/or corn-originated starch, or starch consisting mainly of the starch as a raw material. The drying process is carried out by hot air-drying and/or frying the alpha noodles.

The JP-S-5971658 A discloses a that a raw material starch is blended with 1 to 30 wt% of one or more of crosslinked etherified starch or crosslinked esterified starch having 0.01 to 1 degree of crosslinking (number of crosslinking based on 100 glucose units of starch molecule) and 9.5 to 2 ml degree of swelling.

The CN 101 647 525 A discloses a rice flour mixture comprising esterified crosslinked potato starch, soybean polysaccharide and other additives, which can be used for the preparation of rice noodles.

The JP 2007/238893 A discloses a modified starch having a specific viscosity, and a raw material for the modified starch, such as rice starch, waxy rice starch, corn starch, waxy corn starch, wheat starch, barley starch, potato starch, pea starch, sweet potato starch, and tapioca starch, and those starches are subjected to chemical modifications, such as esterification, etherification, crosslinking; heat humidity treatment; aging, etc., as a raw material for the modified starch. The JP 2011/000013 A discloses a retort udon, the udon containing wheat gluten, phosphate-crosslinked starch and wheat flour. The WO 2014/002573 A1 discloses a starch material that is useful in improving food texture. This starch, a 16 mass% suspension of which, said suspension having been adjusted to pH 3.0, shows no breakdown in acidic amylographic analysis, is used as an active ingredient of a food texture-improving agent. This starch is a phosphate crosslinked starch. The JP 2007/068533 A discloses a method for producing noodles having a good recoverability in hot water. The method comprises: a process for adding water to a starch raw material comprising 80 to 95 weight parts of beta starch and 20 to 5 weight parts of alpha starch to prepare a dough; a process for kneading and forming the obtained dough under vacuum; a process for converting the formed noodles into alpha starch noodles; and a process for drying the alpha starch noodles. The alpha starch is prepared from cross-linked starch and/or corn-originated starch, or starch consisting mainly of the starch as a raw material.The drying process is carried out by hot air-drying and/or frying the alpha noodles. The JPS-5971658 A discloses a that a raw material starch is blended with 1 to 30 wt% of one or more of crosslinked etherified starch or crosslinked esterified starch having 0.01 to 1 degree of crosslinking (number of crosslinking based on 100 glucose units of starch molecule) and 9.5 to 2 ml degree of swelling.

### [Prior Art Documents]

### [Patent Documents]

[Patent Document 1] Japanese Patent No. 4671663
[Patent Document 2] Japanese Patent No. 5153964

### DISCLOSURE OF THE INVENTION

### [Problems to be Solved by the Invention]

These patent documents describe methods capable of preventing "noodle string cracking" during drying by adding a powdered or granular oil or fat or emulsifier to the raw materials to form a plurality of granular openings within the noodle strings during steaming and/or boiling, and/or drying. According to these methods, "noodle string cracking" during high-temperature drying can be relatively easily prevented merely by adding a powdered or granular oil or fat or emulsifier as a raw material. However, since these methods require the use of oil or fat despite being non-frying drying methods, they do not meet the requirement of reducing oil or fat in the production of noodles.

The present invention provides dried noodles and a production method thereof that are capable of preventing or inhibiting "noodle string cracking" of instant dried noodles attributable to high-temperature hot air drying without using an oily or fatty component in the form of a powdered or granular oil or fat or emulsifier.

### [Means for Solving the Problems]

The present invention includes the following embodiments [1] to [8].
[1] Instant swollen dried noodles comprising a main raw material comprising wheat flour and at least one crosslinked gelatinized potato starch selected from the group consisting of etherified crosslinked gelatinized potato starch and esterified crosslinked gelatinized potato starch, wherein the viscosity of the crosslinked gelatinized potato starch is 50 mPa·s or less under measuring conditions of a slurry temperature of 20 °C, slurry concentration of 5 % by weight, and rotating speed of 60 rpm, with a Brookfield viscometer Model BLII, Toki Sangyo Co., Ltd., and wherein the instant swollen dried noodles are free of a powdered or granular oil or fat or emulsifier.
[2] The instant swollen dried noodles described in [1], wherein the amount of the crosslinked gelatinized potato starch added is 1 % by weight to 10 % by weight based on the total weight of the main raw material and the crosslinked gelatinized potato starch.
[3] The instant swollen dried noodles described in [1] or [2], wherein the dried noodles are dried and swollen by using hot air at a temperature of 100 °C to 150 °C and air flow rate of 5 m/s to 25 m/s.
[4] A method of producing instant swollen dried noodles, comprising:
   mixing and kneading a main raw material comprising wheat flour, and at least one crosslinked gelatinized potato starch selected from the group consisting of etherified crosslinked gelatinized potato starch and esterified crosslinked gelatinized potato starch having a viscosity of 50 mPa·s or less under measuring conditions of a slurry temperature of 20 °C, slurry concentration of 5 % by weight, and rotating speed of 60 rpm, with a Brookfield viscometer Model BLII, Toki Sangyo Co., Ltd., and water to form a dough,
   making noodle strings from the dough, and
   drying the noodle strings,
   wherein the instant swollen dried noodles are free of a powdered or granular oil or fat or emulsifier.
[5] The method of producing instant swollen dried noodles described in [4], wherein the amount of the crosslinked gelatinized potato starch added is 1% by weight to 10% by weight based on the total weight of the main raw material and the crosslinked gelatinized potato starch.
[6] The method of producing instant swollen dried noodles described in [4] or [5], further comprising filling individual servings of the noodle strings in a mold form, wherein the dried noodles are instant dried noodles.
[7] The method of producing instant swollen dried noodles described in [6], wherein the drying further comprises drying and swelling the noodle strings by using hot air at a temperature of 100 °C to 150 °C and air flow rate of 5 m/s to 25 m/s.
[8] The method of producing instant swollen dried noodles described in [6], wherein the drying further comprises pre-drying the noodle strings until the moisture content of the noodle strings reaches 15 % by weight to 25 % by weight by using hot air at a temperature of 80 °C to 115 °C and air flow rate of 1 m/s to 10 m/s, followed by drying and swelling the noodle strings until the moisture content of the noodle strings reaches 7 % by weight to 14 % by weight by using hot air at a temperature of 100 °C to 150 °C and air flow rate of 5 m/s to 25 m/s.

### [Effects of the Invention]

According to the present invention, "noodle string cracking" of instant dried noodles during high-temperature hot air drying can be easily prevented or inhibited regardless of the thickness of the noodle strings and without using a powdered or granular oil or fat or emulsifier, by adding to the noodles a crosslinked gelatinized potato starch selected from the group consisting of etherified crosslinked gelatinized potato starch and esterified crosslinked gelatinized potato starch. In addition, the effect of inhibiting excessive swelling of noodle strings that leads to "noodle string cracking" can also be obtained. Consequently, the phenomenon of noodle strings separating in two at the time of eating can be prevented while noodle strings having a chewy texture can be obtained. These effects can also be obtained in the case of instant dried noodles including considerably thick noodle strings, such as udon wheat noodles.

The present invention is not only effective for noodles produced by high-temperature hot air drying that may cause "noodle string cracking", but is also effective for so-called "Kanmen (dry noodles)" obtained by hanging noodle strings over a pole and drying for a long period of time at a low temperature (such as for 6 hours at 35 °C to 45 °C). Dry noodles are susceptible to the occurrence of "noodle splitting" (namely, a phenomenon by which cracks form in noodle strings), which is similar to the phenomenon of "noodle string cracking", and require low-temperature, long-term drying. Since "noodle splitting" can be prevented or inhibited by applying the present invention to dry noodles, "noodle splitting" can be prevented even if drying temperature is somewhat higher (such as 50 °C to 90 °C and preferably 70 °C to 80 °C) and drying time is shorter (such as 3 to 4 hours) in comparison with conventional dry noodles dried at a low temperature for a long period of time.

### BRIEF DESCRIPTION OF THE DRAWINGS

FIG. 1 is a photograph taken at 400X of a starch granule following retort processing of noodle strings of Test No. 12 (control).
FIG. 2 is a photograph taken at 400X of a starch granule following retort processing of noodle strings of Test No. 13.
FIG. 3 is a photograph taken at 400X of a starch granule following retort processing of noodle strings of Test No. 14.
FIG. 4 is a photograph taken at 400X of a starch granule following retort processing of noodle strings of Test No. 15.
FIG. 5 is a cross-sectional photograph taken at 50X of a noodle string of Example 1.
FIG. 6 is a cross-sectional photograph taken at 50X of a noodle string of Comparative Example 1.

### MODE FOR CARRYING OUT THE INVENTION

Although the following provides a more detailed explanation for the purpose of exemplifying typical embodiments of the present invention with reference to the drawings, the present invention is not limited to these embodiments. All percentages are based on weight unless specifically indicated otherwise.

The term "dried noodles" in the present description refers to noodles obtained by drying noodle strings following the noodle making, according to a method such as deep-frying, hot air drying, microwave drying, freeze-drying or cold air drying.

The term "instant dried noodles" in the present description refers to the aforementioned "dried noodles" formed into individual servings that can be supplied for consumption by simple preparation procedures, and includes a type that is prepared by boiling in a pot and a type that is prepared by adding hot water thereon. Examples of simple preparation procedures include preparing by boiling in hot water in a pot for several minutes (such as for 1 minute, 3 minutes, 5 minutes or 7 minutes) and adding hot water thereon and allowing to stand for several minutes (such as 1 minute, 3 minutes, 5 minutes or 7 minutes).

The term "instant swollen dried noodles" refers to the aforementioned "instant dried noodles" in which the noodle strings have been swollen. Examples of a means for swelling noodle strings include drying the noodle strings by using high-temperature hot air (such as hot air at a temperature of 100 °C to 150 °C and air flow rate of 5 m/s to 25 m/s) to swell the noodle strings.

The term "retort resistance" of potato starch in the present description refers to being able to observe the presence of the characteristic oval shape of potato starch granules when dried noodles are placed in a container, immersed in water and subjected to retort processing (120 °C, 10 minutes) followed by mashing the retort processed noodles by using a mortar and observing them by using a light microscope (at a magnification factor of 400X, for example). A retort sterilization device, for example, can be used for retort processing.

The dried noodles according to the present invention are dried noodles containing a main raw material and at least one crosslinked gelatinized potato starch selected from the group consisting of etherified crosslinked gelatinized potato starch and esterified crosslinked gelatinized potato starch. The viscosity of the crosslinked gelatinized potato starch is 50 mPa·s or less under measuring conditions of a slurry temperature of 20 °C, slurry concentration of 5 % by weight, and rotating speed of 60 rpm, with a Brookfield viscometer Model BLII, Toki Sangyo Co., Ltd., and wherein the instant swollen dried noodles are free of a powdered or granular oil or fat or emulsifier.

While not wishing to be bound by any theory, the effect of the present invention of preventing or inhibiting "noodle string cracking" is thought to be achieved by the following mechanism. Namely, since the specific crosslinked gelatinized potato starch added in the present invention is resistant to gelatinization and in the form of large starch granules, it does not mix uniformly with other raw materials in the noodle dough (such as wheat flour or other starches), and pathways through which air is able to pass during drying are formed in the noodle dough. "Noodle string cracking" is thought to be able to be prevented or inhibited as a result of allowing moisture to evaporate through these air pathways.

### Main raw materials

The instant swollen dried noodles according to the present invention comprise a main raw material that comprises wheat flour. Examples of main raw materials that may be used in the present invention include durum flour, buckwheat flour, barley flour, starch, rice flour and mixtures thereof. In the present invention, the instant swollen dried noodels comprise at least one crosslinked gelatinized potato starch selected from the group consisting of etherified crosslinked gelatinized potato starch and esterified crosslinked gelatinized potato starch. Examples of starch that may be used include tapioca starch, waxy cornstarch, cornstarch and wheat starch, oxidized starch and other processed starches obtained by using the aforementioned starch as raw materials.

### Secondary Raw Materials

Secondary raw materials may be added to the noodles in the present invention. Examples of secondary raw materials able to be used include lye water, phosphates, polyphosphates, dietary salt, polysaccharide thickener, eggs and gluten.

### Crosslinked Gelatinized Potato Starch

The crosslinked gelatinized potato starch selected from the group consisting of etherified crosslinked gelatinized potato starch and esterified crosslinked gelatinized potato starch can be obtained by subjecting potato starch to crosslinking treatment and etherification or esterification treatment followed by gelatinizing the resulting etherified crosslinked potato starch or esterified crosslinked potato starch. Etherification and esterification both contribute to the formation of potato starch having suitable degrees of crosslinking and gelatinization by terminating hydroxyl groups of highly crosslinked potato starch thereby promoting gelatinization of starch.

There are no particular limitations on the method of crosslinking treatment, and examples thereof include those using a crosslinking agent, such as metaphosphates or adipates. Crosslinking treatment using sodium trimetaphosphate or phosphorus oxychloride as a crosslinking agent is preferable.

There are no particular limitations on the method of etherification treatment, and examples thereof include hydroxypropyl etherification by using propylene oxide.

There are no particular limitations on the method of esterification treatment, and examples thereof include acetic acid esterification by using acetic anhydride or vinyl acetate, octenylsuccinic acid esterification by using octenylsuccinic acid and phosphoric acid monoesterification by using orthophosphoric acid, potassium orthophosphate, sodium orthophosphate or sodium tripolyphosphate. Acetic acid esterification by using acetic anhydride or vinyl acetate is preferable.

There are no particular limitations on the method of gelatinization, and examples thereof include methods comprising gelatinizing, drying and crushing by using a drum dryer, spray dryer or extruder. In the case of a method using a drum dryer, for example, gelatinized starch can be obtained by preparing a 20 % by weight to 25 % by weight of an aqueous suspension of starch serving as a raw material, allowing the suspension to stand for 4 minutes to 7 minutes at 90 °C to 120 °C, and drying for less than 1 minute in a drum dryer having a surface temperature of about 150 °C.

The degree of crosslinking of the starch can be classified into any one of three types consisting of "high", "medium" and "low" by measuring a viscosity curve of the starch by using a Brabender amylograph. An amylograph refers to an apparatus that automatically heats, holds at a certain temperature and cools a suspension of a sample and records the changes in viscosity thereof. A "low" degree of crosslinking refers to the degree of crosslinking when starch is crosslinked to a degree to which breakdown (decrease in viscosity) is observed during measurement of the viscosity curve. A "medium" degree of crosslinking refers to the degree of crosslinking when starch is subjected to crosslinking treatment to a degree to which the viscosity continues to rise and the viscosity curve is soaring without breakdown being observed during measurement of the viscosity curve. A "high" degree of crosslinking refers to the degree of crosslinking when starch is crosslinked to a degree to which the viscosity is nearly constant and the viscosity curve remains nearly horizontal without exhibiting a significant increase in viscosity during measurement of the viscosity curve. The degree of crosslinking of gelatinized starch is classified as "high", "medium" or "low" according to a viscosity curve measured in the state of β-starch prior to undergoing gelatinization.

The crosslinked gelatinized potato starch in the present invention is a starch classified as having a degree of crosslinking that is even higher than the "high" degree of crosslinking based on the classification of degree of crosslinking according to a starch viscosity curve measured by using a Brabender amylograph as previously described, or in other words, "ultra-high crosslinking". The degree of crosslinking of the crosslinked gelatinized potato starch can be represented by the viscosity of a slurry thereof. This is based on the fact that the viscosity of a slurry of a crosslinked starch decreases due to expansion of the starch being inhibited as a result of subjecting the starch to crosslinking treatment (refer to Kainuma, et al., "Research on Phosphoric Acid Derivatives of Starch (Report No. 1) - Synthesis of Phosphate-Crosslinked Starch with Phosphoric Anhydride", Journal of Japanese Starch Industry, 14, 24-28, 1967). Namely, high viscosity refers to having a low degree of crosslinking, while low viscosity refers to having a high degree of crosslinking. "Ultra-high crosslinking" herein specifically refers to the viscosity of crosslinked gelatinized potato starch measured under conditions of a slurry temperature of 20 °C, slurry concentration of 5 % by weight and rotating speed of 60 rpm being 100 mPa·s or less, preferably 20 mPa·s or less and even more preferably 10 mPa·s or less.

The degree of crosslinking of crosslinked gelatinized potato starch can also be represented by the "retort resistance" of the potato starch. As was previously described, since expansion and excessive gelatinization of starch granules are inhibited by subjecting the starch to crosslinking treatment, the starch granules are resistant to collapse even if subjected to retort processing, and the presence of the starch granules can be observed in noodle strings following retort processing. The crosslinked gelatinized potato starch in the present invention is "ultra-high crosslinked" starch that is crosslinked to a degree to which starch granules do not collapse and can be observed in noodle strings following retort processing.

The amount added of the crosslinked gelatinized potato starch according to one embodiment of the present invention is 1 % by weight to 10 % by weight and preferably 3 % by weight to 7 % by weight based on the total weight of the main raw material and crosslinked gelatinized potato starch. As a result of adding the crosslinked gelatinized potato starch within these ranges, dried noodles can be obtained that demonstrate especially superior reconstitutability (restorability) and provide a more favorable texture at the time of eating.

According to one embodiment of the present invention, a method of producing dried noodles is provided that comprises mixing and kneading a main raw material comprising wheat flour, and at least one crosslinked gelatinized potato starch selected from the group consisting of etherified crosslinked gelatinized potato starch and esterified crosslinked gelatinized potato starch having a viscosity of 50 mPa·s or less under measuring conditions of a slurry temperature of 20 °C, slurry concentration of 5 % by weight, and rotating speed of 60 rpm, with a Brookfield viscometer Model BLII, Toki Sangyo Co., Ltd. and water to form a dough, making noodle strings from the dough, and drying the noodle strings wherein the instant swollen dried noodles are free of a powdered or granular oil or fat or emulsifier.

Mixing and kneading can be carried out by using a machine, such as a mixer. Kneading water obtained by dissolving, for example, a phosphate or dietary salt in water may be used as the water.

There are no particular limitations on the method of noodle making, provided it is a method comprising forming a dough obtained by mixing and kneading into noodle strings, and examples thereof include (1) rolling out the dough obtained by mixing and kneading by using a roller and cutting the dough into noodle strings, and (2) extruding the dough by using an extruder to directly form the dough into noodle strings. In the method of (1), for example, the dough obtained by mixing and kneading is formed into a sheet (referred to as a dough sheet) by using a roller. A plurality (such as two) of dough sheets are typically formed simultaneously and the plurality of dough sheets are compounded into a single sheet by using a roller. Next, the compounded dough sheet is rolled out and stretched out to a desired thickness by using a plurality of rollers with a circumferential speed ratio between the rollers. The rolled dough sheet is then cut into the shape of noodle strings by using a cutter apparatus. The apparatus used for compounding and rolling may be generically referred to as a compounding rolling machine. The length of the grooves of the cutter may be represented by the number of noodle strings cut out within a width of 30 mm, which number is referred to as a count. For example, a No. 10 cutter provides 10 noodle strings for a dough sheet width of 30 mm (namely, the width of a single noodle string is 3 mm). There are different types of cutting blades, such as rectangular cutting blades or circular cutting blades, according to the shape of the resulting noodle strings.

Drying can be carried out by various methods, such as deep-frying drying, hot air drying, microwave drying, freeze-drying or cold air drying.

According to one embodiment of the present invention, individual servings of the produced noodle strings are filled into a mold form. In general, the noodle strings are cut perpendicular to the lengthwise direction of the noodle strings to a length for an individual serving prior to being filled into a mold form. The noodle strings may be untangled prior to filling.

According to one embodiment of the present invention, the noodle strings are dried with high-temperature hot air. The steps of the high-temperature hot air drying method can be generally divided into two steps of pre-drying for adjusting the moisture content of the noodle strings to 15 % by weight to 25 % by weight in order to prevent rapid foaming and swelling of the noodle strings, and final drying for swelling and drying the pre-dried noodle strings. Use of the crosslinked gelatinized potato starch according to the present invention makes it possible to eliminate pre-drying.

During final drying, the noodle strings are dried and swollen with hot air adjusted to a temperature of 100 °C to 150 °C (preferably 11 5°C to 135 °C) and air flow rate of 5 m/s to 25 m/s (preferably 8 m/s to 20 m/s). In this step, the noodle strings are foamed by rapidly evaporating moisture present in the noodle strings resulting in the occurrence of "noodle string swelling". Final drying can be carried out for 2 minutes to 5 minutes, for example. In one embodiment, the moisture content of the noodle strings is made to be 7 % by weight to 14 % by weight by swelling and drying the noodle strings with high-temperature, rapid flow hot air.

Pre-drying may be optionally carried out prior to final drying. During pre-drying, the noodle strings are pre-dried with hot air at a temperature of 80 °C to 115 °C (preferably 95 °C to 105 °C) and air flow rate of 1 m/s to 10 m/s (preferably 3 m/s to 5 m/s) in order to adjust the moisture content of the noodle strings to 15 % by weight to 25 % by weight. As a result of carrying out this step, the central portions of the noodle strings can be rapidly and efficiently dried while preventing rapid foaming and swelling of the noodle strings during final drying using high-temperature hot air.

High-temperature hot air drying can use an ordinary hot air drying system. Various types of hot air dryers can be used, such as a compartment dryer, tunnel dryer or spiral hot air dryer.

The present invention can be applied to all types of dried noodles, examples of which include Chinese noodles, udon wheat noodles, buckwheat noodles, thin wheat noodles, cold noodles, flat noodles, pastas, and rice flour noodles, such as pho or vermicelli.

### [Examples]

### Testing Methods

Testing methods are explained below.

### Viscosity Measurement

To 10 g of starch is added 10 g of ethanol having a concentration of 90 % by weight followed by stirring for 15 seconds to cause the starch to expand. To the mixture is added 180 g of water (20 °C) followed by stirring for 3 minutes to prepare a slurry having a concentration of 5 % by weight at a temperature of 20 °C. This slurry is then measured with a viscometer (Brookfield viscometer: Model BLII, Toki Sangyo Co., Ltd.).

### Measurement of Noodle String Cross-Sectional Area

Noodle string cross-sectional area is measured by using a digital microscope (Model VH-7000, Keyence Corp., measurement system incorporating CCD camera and personal computer (PC)). First, a cross-section of a sample of a noodle string is photographed by using the CCD camera (magnification factor: 50X). Next, the image captured with the CCD camera is loaded into the PC and about 20 points on the outer periphery of the image of a noodle string to be measured are plotted on the PC monitor followed by calculating the value of cross-sectional area with the PC. Measurements are made at four locations at roughly 2 cm intervals per string and measurements are carried out on five strings. The arithmetic mean of the values of cross-sectional area measured at a total of 20 locations (total of values of cross-sectional area at 20 locations/20) is then determined and used as the cross-sectional area of the noodle string sample.

### Measurement of Retort Resistance of Starch Granules

Dried noodles are placed in a container and immersed in water followed by subjecting to retort processing (120 °C, 10 minutes). The retort processed noodle strings are mashed by using a mortar and starch granules of the starch contained in the noodle strings are observed at a magnification factor of 400X by using a light microscope (Model BX-50, Olympus Corp.). Since starch granules of potato starch have a characteristic oval shape, the presence thereof can be easily observed.

### Test Example A (Test Nos. 1 to 11)

### Preparation of Control Sample

800 g of wheat flour (ASW: protein content: 9.5 %) and 200 g of potato starch (Okhotsk Abashiri Inc.) were mixed followed by addition of kneading water obtained by dissolving 5 g of sodium polyphosphate and 10 g of dietary salt in 330 mL of water and kneading by using a mixer to prepare a dough. The dough was then compounded and rolled by using a compounding rolling machine and then cut at a noodle thickness of 1.32 mm by using a No. 9 cutter having rectangular cutting blades to obtain noodle strings. The noodle strings were cut to a length of 15 cm and five strings were filled into a drying mold form so as not to overlap while keeping the noodle strings straight. Subsequently, the noodle strings were dried for 4 minutes in a dryer adjusted to a temperature of 130 °C, humidity of 200 hPa and air flow rate of 10 m/s to obtain instant dried noodles of the boiling type

subjected to high-temperature hot air drying and having a final moisture content of 8 % by weight.

### Preparation of Test Samples

Samples were prepared by using the test starches indicated below and subsequently compared. The "high" and "medium" degree of crosslinking indicated in a table is based on the classification as determined from a starch viscosity curve (viscosity curve of β-starch prior to gelatinization in the case of gelatinized starch) measured by using a Brabender amylograph as previously described.

**Table 1**

| Test No. | Type of Test Starch | Degree of Crosslinking |
|---|---|---|
| 1 | Not added (control sample) | - |
| 2 | Etherified phosphate-crosslinked gelatinized potato starch | High |
| 3 | Etherified phosphate-crosslinked potato starch (β) | High |
| 4 | Etherified phosphate-crosslinked gelatinized tapioca starch | High |
| 5 | Etherified phosphate-crosslinked gelatinized waxy starch | Medium |
| 6 | Phosphate-crosslinked β-tapioca starch | High |
| 7 | Monoesterified phosphate-crosslinked β-wheat starch | High |
| 8 | Phosphate-crosslinked gelatinized tapioca starch | Medium |
| 9 | Etherified phosphate-crosslinked gelatinized tapioca starch | Medium |
| 10 | Phosphate-crosslinked potato starch | High |
| 11 | Phosphate-crosslinked gelatinized potato starch | High |

In contrast to control sample 1 containing 800 g of wheat flour and 200 g of potato starch, test samples 2 to 11, to which a test starch was added, contained 800 g of wheat flour, 150 g of potato starch and 50 g of test starch. Namely, the added amount of test starch was 5 % by weight based on the total weight of the wheat flour, potato starch and test starch. The total amount of starch added (total of potato starch and test starch) was made to be 20 % by weight based on the total weight of the wheat flour, potato starch and test starch. Since the degree of kneading varies according to the type of starch used, samples were prepared in the same manner as the control sample with the exception of adjusting kneading so that all samples were kneaded to the same degree. "Noodle string cracking" and "noodle string swelling" were evaluated visually.

Table 2. Effects of Test Starches on "Noodle String Cracking" and "Noodle String Swelling"

| Test No. | Noodle String Cracking | Noodle String Swelling |
|---|---|---|
| 1 | Present | Excessive swelling |
| 2 | Absent | Excessive swelling inhibited |
| 3 | Present | Excessive swelling |
| 4 | Present | Excessive swelling |
| 5 | Present | Excessive swelling |
| 6 | Present | Excessive swelling |
| 7 | Present | Excessive swelling |
| 8 | Present | Excessive swelling |
| 9 | Present | Excessive swelling |
| 10 | Present | Excessive swelling |
| 11 | Present | Excessive swelling |

In the table, the absence of noodle string cracking indicates that little noodle string cracking was observed in the resulting noodles in the case of having observed cross-sections of noodle strings with the naked eye, while the presence of noodle string cracking indicates that noodle string cracking was observed in 50 % or greater of the resulting noodles in the case of having observed cross-sections of noodle strings with the naked eye.

"Noodle string cracking" was prevented in the noodle string sample containing etherified phosphate-crosslinked gelatinized potato starch of Test No. 2. The etherified phosphate-crosslinked potato starch (β) of Test No. 3 corresponds to the etherified phosphate-crosslinked gelatinized potato starch of Test No. 2 without gelatinization (namely, the starch of Test No. 2 is obtained by gelatinizing the starch of Test No. 3). Since "noodle string cracking" was not prevented in the noodle string sample of Test No. 3, starch which is able to be used in the present invention requires gelatinization treatment. The etherified phosphate-crosslinked gelatinized tapioca starch of Test No. 4 was produced by treating in the same manner as the etherified phosphate-crosslinked gelatinized potato starch of Test No. 2 with the exception of the use of a different raw material. Since "noodle string cracking" was not prevented in the noodle string sample of Test No. 4, tapioca is unsuitable as a raw material of starch which is able to be used in the present invention while potato starch is suitable.

### Test Example B (Test Nos. 12 to 15)

Testing was carried out by using the following test etherified crosslinked gelatinized potato starches having the same degree of etherification (degree of substitution (DS): 0.1) but different degrees of crosslinking. According to the classification of degree of crosslinking based on classification of a starch viscosity curve measured by using a Brabender amylograph as previously described (viscosity curve of β-starch prior to gelatinization in the case of gelatinized starch), the degrees of crosslinking of the etherified crosslinked gelatinized potato starches used in Test Example B were all "high". Degree of crosslinking was classified in greater detail by measuring the viscosities of the test etherified crosslinked gelatinized potato starches according to the previously described method. The types, DSs, degrees of crosslinking and viscosities of the test etherified crosslinked gelatinized potato starches are shown in Table 3.

**Table 3**

| Test No. | Type of Test Starch | DS | Degree of Crosslinking | Viscosity |
|---|---|---|---|---|
| 12 | Not added (control sample) | - | - | - |
| 13 | Etherified crosslinked gelatinized potato starch | 0.1 | High | 8.6 mPa·s (60 rpm) |
| 14 | Etherified crosslinked gelatinized potato starch | 0.1 | High | 30 mPa·s (60 rpm) |
| 15 | Etherified crosslinked gelatinized potato starch | 0.1 | High | 2300 mPa·s (12 rpm) |

Next, samples of the test etherified crosslinked gelatinized potato starches shown in Table 3 were prepared by using the same method as the aforementioned Test Example A and subjected to comparative testing. "Noodle string cracking" and "noodle string swelling" were evaluated visually.

Table 4. Effects of Etherified Crosslinked Gelatinized Potato Starches having Different Degrees of Crosslinking on "Noodle String Cracking" and "Noodle String Swelling"

| Test No. | Noodle String Cracking | Noodle String Swelling |
|---|---|---|
| 12 (control) | Present | Excessive swelling |
| 13 | Absent | Excessive swelling inhibited |
| 14 | Not much | Excessive swelling inhibited to a certain degree |
| 15 | Present | Excessive swelling |

In the table, the absence of noodle string cracking indicates that little noodle string cracking was observed in the resulting noodles in the case of having observed cross-sections of noodle strings with the naked eye, noodle string cracking being not much indicates that noodle string cracking was observed in 30 % or greater of the resulting noodles in the case of having observed cross-sections of noodle strings with the naked eye, while the presence of noodle string cracking indicates that noodle string cracking was observed in 50 % or greater of the resulting noodles in the case of having observed cross-sections of noodle strings with the naked eye. Prevention or inhibition of noodle string cracking and inhibition of excessive swelling of noodle strings were observed in Test Nos. 13 and 14.

Next, the cross-sectional areas of noodle string samples prepared by using the test etherified crosslinked gelatinized potato starches shown in Table 3 and an uncooked noodle string sample prior to drying were measured by using the previously described method followed by quantifying the degree of "noodle string swelling".

**Table 5**

| Test No. | Cross-Sectional Area (mm²) | Percentage of Cross-sectional Area Based on Value of 100 for Uncooked Noodles (%) | Difference in Cross-Sectional Area from Uncooked Noodles (%) |
|---|---|---|---|
| Raw noodles | 4.1 | 100.0 | 0 |
| 12 (control) | 6.3 | 153.7 | +53.7 |
| 13 | 4.5 | 109.8 | +9.8 |
| 14 | 5.5 | 134.1 | +34.1 |
| 15 | 6.4 | 156.1 | +56.1 |

Excessive noodle string swelling was quantitatively determined to be inhibited in Test Nos. 13 and 14, which were observed to demonstrate prevention or inhibition of "noodle string cracking" and inhibition of excessive noodle string swelling (see Table 4) in comparison with Test No. 12 (control).

### Retort Resistance of Starch Granules

Retort resistance of starch granules present in noodle string samples was measured by using the previously described method.

**Table 6**

| Test No. | Observed Starch Granule Status |
|---|---|
| 12 (Control) | Presence of potato starch granules unable to be observed |
| 13 | Presence of potato starch granules able to be definitively observed |
| 14 | Presence of potato starch granules able to be definitively observed but shape of starch granules somewhat collapsed |
| 15 | Few potato starch granules able to be observed, and even if observed, the shape of starch granules collapsed |

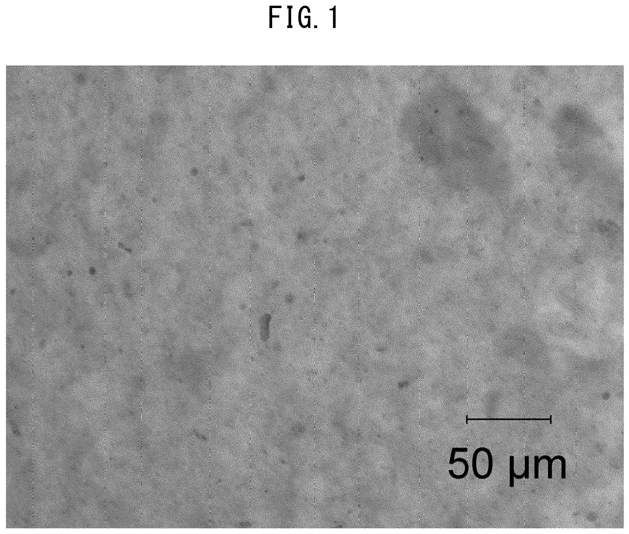

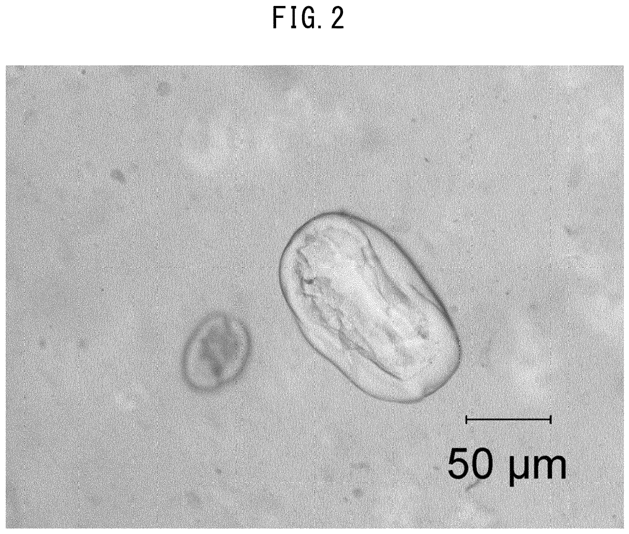

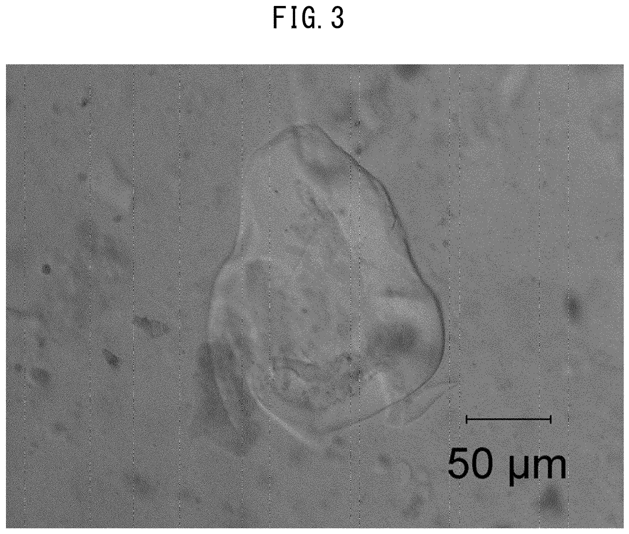

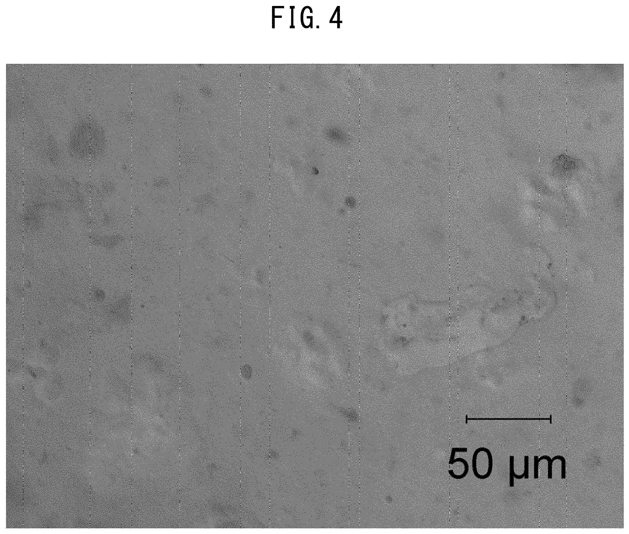

FIGS. 1 to 4 depict images of starch granules. Although the presence of starch granules was unable to be observed in the control sample of Test No. 12, the presence of potato starch granules was able to be observed in Test Nos. 13 and 14, in which prevention or inhibition of "noodle string cracking" and inhibition of excessive swelling of noodle strings by the addition of etherified crosslinked gelatinized potato starch were observed as previously described. Considering that the difference between Test No. 12 and Test Nos. 13 and 14 is whether etherified crosslinked gelatinized potato starch was added or not, the observed starch granules are derived from the etherified crosslinked gelatinized potato starch.

### Sensory Evaluation

A sensory evaluation was carried out on the noodle string samples obtained in Test Nos. 12 to 15. The sensory evaluation was carried out by 10 panelists. Tasting samples were prepared by preparing each of the noodle string samples by boiling for 5 minutes in 500 mL of hot water. The appearance of the tasting samples was evaluated visually after which the samples were eaten and evaluated for texture.

**Table 7. Sensory Evaluation Results**

| Test No. | Appearance at the Time of Eating | Texture |
|---|---|---|
| 12 (control) | Absence of product value due to many of the noodle strings separating into two portions | Soggy and not chewy |
| 13 | Presence of product value since noodle strings did not separate at the time of eating | Chewy and filling |
| 14 | Lower percentage of separated noodle strings in comparison with control sample | Chewier than control sample due to preventing noodle string cracking |
| 15 | Many noodle strings separated into two portions at the time of eating | Absence of chewiness of noodle strings that separated into two portions |
| | | Chewier than control sample for noodle strings that did not separate |

### Example 1

750 g of wheat flour (ASW, protein content: 9.5 %), 200 g of tapioca starch (Sakura Brand, Matsutani Chemical Industry Co., Ltd.) and 50 g of etherified phosphate-crosslinked gelatinized potato starch (Pinesoft S, Matsutani Chemical Industry Co., Ltd.) were mixed followed by addition of kneading water obtained by dissolving 5 g of sodium polyphosphate and 10 g of dietary salt in 380 mL of water and kneading by using a mixer to prepare a dough. The dough was then compounded and rolled by using a compounding rolling machine and then cut at a noodle thickness of 1.3 mm by using a No. 10 cutter having rectangular cutting blades to obtain noodle strings. The noodle strings were cut to a weight of 120 g and then filled into a drying mold form (cylindrical mold form, diameter: 130 mm × depth: 45 mm) to obtain a noodle lump. After filling the noodle strings into the mold form, the mold form was covered. The cover contained an indentation having a diameter of 125 mm and depth of 10 mm, and the cover was attached by fitting the indentation into the mold form. The noodle lump was then dried for 4 minutes and 30 seconds in a dryer adjusted to a temperature of 130 °C, humidity of 200 hPa and air flow rate of 10 m/s to obtain instant swollen dried noodles of the boiling type subjected to high-temperature hot air drying and having a final moisture content of 9 % by weight.

### Example 2

750 g of wheat flour (ASW, protein content: 9.5 %), 200 g of potato starch (Tanpopo Brand, Matsutani Chemical Industry Co., Ltd.) and 50 g of etherified phosphate-crosslinked gelatinized potato starch (Pinesoft B, Matsutani Chemical Industry Co., Ltd.) were mixed followed by addition of kneading water obtained by dissolving 5 g of sodium polyphosphate and 10 g of dietary salt in 400 mL of water and kneading by using a mixer to prepare a dough. The dough was then compounded and rolled by using a compounding rolling machine and then cut at a noodle thickness of 1.3 mm by using a No. 10 cutter having rectangular cutting blades to obtain noodle strings. The noodle strings were cut to a weight of 120 g and then filled into a drying mold form (cylindrical mold form, diameter: 130 mm × depth: 45 mm) to obtain a noodle lump. After filling the noodle strings into the mold form, the mold form was covered. The cover contained an indentation having a diameter of 125 mm and depth of 10 mm, and the cover was attached by fitting the indentation into the mold form. The noodle lump was then dried for 4 minutes and 30 seconds in a dryer adjusted to a temperature of 130 °C, humidity of 200 hPa and air flow rate of 10 m/s to obtain instant swollen dried noodles of the boiling type subjected to high-temperature hot air drying and having a final moisture content of 9 % by weight.

### Example 3

800 g of wheat flour (ASW, protein content: 9.5 %), 150 g of tapioca starch (Sakura Brand, Matsutani Chemical Industry Co., Ltd.) and 50 g of etherified phosphate-crosslinked gelatinized potato starch (Pinesoft S, Matsutani Chemical Industry Co., Ltd.) were mixed followed by addition of kneading water obtained by dissolving 5 g of sodium polyphosphate and 10 g of dietary salt in 330 mL of water and kneading by using a mixer to prepare a dough. The dough was then compounded and rolled by using a compounding rolling machine and then cut at a noodle thickness of 1.5 mm by using a No. 18 cutter having rectangular cutting blades to obtain noodle strings. The noodle strings were cut to a weight of 120 g and then filled into a drying mold form (cylindrical mold form, diameter: 130 mm × depth: 45 mm) to obtain a noodle lump. After filling the noodle strings into the mold form, the mold form was covered. The cover contained an indentation having a diameter of 125 mm and depth of 10 mm, and the cover was attached by fitting the indentation into the mold form. The noodle lump was then dried for 4 minutes in a dryer adjusted to a temperature of 130 °C, humidity of 200 hPa and air flow rate of 10 m/s to obtain instant swollen dried noodles of the boiling type subjected to high-temperature hot air drying and having a final moisture content of 9 % by weight.

### Comparative Example 1

Instant swollen dried noodles subjected to high-temperature hot air drying were prepared in the same manner as Example 1 with the exception of not using 50 g of etherified phosphate-crosslinked gelatinized potato starch (Pinesoft S, Matsutani Chemical Industry Co., Ltd.) and changing the amount of tapioca starch (Sakura Brand, Matsutani Chemical Industry Co., Ltd.) to 250 g.

### Comparative Example 2

Instant swollen dried noodles subjected to high-temperature hot air drying were prepared in the same manner as Example 2 with the exception of not using 50 g of etherified phosphate-crosslinked gelatinized potato starch (Pinesoft B, Matsutani Chemical Industry Co., Ltd.) and changing the amount of potato starch (Tanpopo Brand, Matsutani Chemical Industry Co., Ltd.) to 250 g.

### Comparative Example 3

Instant swollen dried noodles subjected to high-temperature hot air drying were prepared in the same manner as Example 3 with the exception of not using 50 g of etherified phosphate-crosslinked gelatinized potato starch (Pinesoft S, Matsutani Chemical Industry Co., Ltd.) and changing the amount of tapioca starch (Sakura Brand, Matsutani Chemical Industry Co., Ltd.) to 200 g.

The product names and suppliers of the etherified phosphate-crosslinked gelatinized potato starch used in the examples, viscosity measured under conditions of a slurry temperature of 20 °C, slurry concentration of 5 % by weight and rotating speed of 60 rpm, and retort resistance are shown in Table 8, while the amounts of wheat flour, starch and etherified phosphate-crosslinked gelatinized potato starch of Examples 1 to 3 and Comparative Examples 1 to 3 are shown in Table 9. Measurements of viscosity and retort resistance were carried out by using the previously described methods. In the table, the presence of retort resistance means that the presence of the characteristic oval shape of potato starch was able to be observed when the dried noodles were placed in a container, immersed in water and subjected to retort processing (120 °C, 10 minutes) followed by mashing the retort processed noodles by using a mortar and observing them by using a light microscope at a magnification factor of 400X.

**Table 8**

| Product Name | Supplier | Viscosity (mPa-s) | Retort Resistance |
|---|---|---|---|
| Pinesoft S | Matsutani Chemical Industry Co., Ltd. | 4.9 | Present |
| Pinesoft B | Matsutani Chemical Industry Co., Ltd. | 4.7 | Present |

**Table 9**

| Amount (g) | | Ex. 1 | Ex. 2 | Ex. 3 | Comp. Ex. 1 | Comp. Ex. 2 | Comp. Ex. 3 |
|---|---|---|---|---|---|---|---|
| Wheat flour | Wheat flour (ASW, protein content: 9.5%) | 750 | 750 | 800 | 750 | 750 | 800 |
| Starch | Tapioca starch (Sakura Brand, Matsutani Chemical Industry Co., Ltd.) | 200 | - | 150 | 250 | - | 200 |
| | Potato starch (Tanpopo Brand, Matsutani Chemical Industry Co., Ltd.) | - | 200 | - | - | 250 | - |
| Etherified phosphate-crosslinked gelatinized potato starch | Etherified phosphate-crosslinked gelatinized potato starch (Pinesoft S, Matsutani Chemical Industry Co., Ltd.) | 50 | - | 50 | - | - | - |
| | Etherified phosphate-crosslinked gelatinized potato starch (Pinesoft B, Matsutani Chemical Industry Co., Ltd.) | - | 50 | - | - | - | - |
| Total (g) | | 1000 | 1000 | 1000 | 1000 | 1000 | 1000 |
| Ratio of etherified phosphate-crosslinked gelatinized potato starch to total of wheat flour, potato starch or tapioca starch and etherified phosphate-crosslinked gelatinized potato starch (%) | | 5 | 5 | 5 | - | - | - |

The appearance of the noodle string samples of Examples 1 to 3 and Comparative Examples 1 to 3 prior to preparation was evaluated visually followed by evaluating for "noodle string cracking" and "noodle string swelling". In addition, tasting samples were prepared and subjected to sensory evaluations. The sensory evaluations were carried out by 10 panelists. Tasting samples were prepared by preparing each of the noodle string samples by boiling for 5 minutes in 500 mL of hot water. The appearance of the tasting samples was evaluated visually after which the samples were eaten and evaluated for texture.

**Table 10**

| Test No. | Evaluation of Appearance Before Preparation | | Sensory Evaluation of Tasting Samples |
|---|---|---|---|
| | Noodle String Cracking | Noodle String Swelling | |
| Example 1 | Absent | Excessive swelling inhibited | Noodles firm and chewy |
| Example 2 | Absent | Excessive swelling inhibited | Noodles firm and chewy |
| Example 3 | Absent | Excessive swelling inhibited | Noodles firm and chewy |
| Comp. Ex. 1 | Present | Excessive swelling and conspicuous voids | Absence of chewiness due to noodle string cracking, absence of product value |
| Comp. Ex. 2 | Present | Excessive swelling and conspicuous voids | Absence of chewiness due to noodle string cracking, absence of product value |
| Comp. Ex. 3 | Present | Excessive swelling and conspicuous voids | Absence of chewiness due to noodle string cracking, absence of product value |

In the table, the absence of noodle string cracking indicates that little noodle string cracking was observed in the resulting noodles in the case of having observed cross-sections of noodle strings with the naked eye, while the presence of noodle string cracking indicates that noodle string cracking was observed in 50% or greater of the resulting noodles in the case of having observed cross-sections of noodle strings with the naked eye.

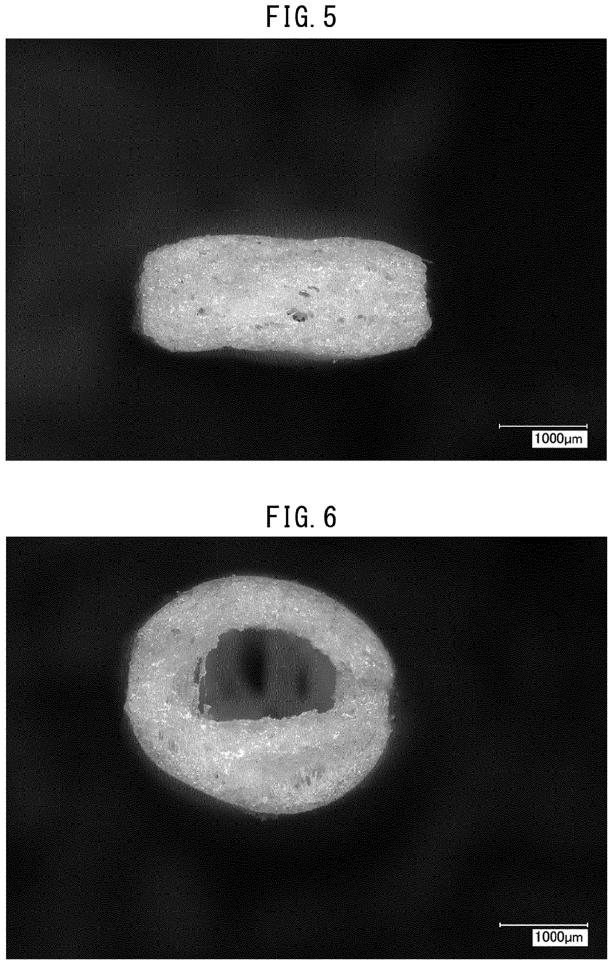

FIG. 5 depicts a photograph of a cross-section of a noodle string of Example 1, while FIG. 6 depicts a photograph of a cross-section of a noodle string of Comparative Example 1. A large void is present in the central portion of the noodle string shown in the cross-sectional view of the noodles of Comparative Example 1, thereby indicating the occurrence of "noodle string cracking". On the other hand, "noodle string cracking" is not present in the cross-section of the noodles of Example 1, and there is also no excessive swelling of noodle strings.

## Claims

1. Instant swollen dried noodles comprising a main raw material comprising wheat flour and at least one crosslinked gelatinized potato starch selected from the group consisting of etherified crosslinked gelatinized potato starch and esterified crosslinked gelatinized potato starch, wherein the viscosity of the crosslinked gelatinized potato starch is 50 mPa.s or less under measuring conditions of a slurry temperature of 20 °C, slurry concentration of 5 % by weight, and rotating speed of 60 rpm, with a Brookfield viscometer Model BLII, Toki Sangyo Co., Ltd., and wherein the instant swollen dried noodles are free of a powdered or granular oil or fat or emulsifier.

2. The instant swollen dried noodles according to claim 1, wherein the amount of the crosslinked gelatinized potato starch added is 1 % by weight to 10 % by weight based on the total weight of the main raw material and the crosslinked gelatinized potato starch.

3. The instant swollen dried noodles according to claim 1 or 2, wherein the dried noodles are dried and swollen by using hot air at a temperature of 100 °C to 150 °C and air flow rate of 5 m/s to 25 m/s.

4. A method of producing instant swollen dried noodles, comprising:
mixing and kneading a main raw material comprising wheat flour, and at least one crosslinked gelatinized potato starch selected from the group consisting of etherified crosslinked gelatinized potato starch and esterified crosslinked gelatinized potato starch having a viscosity of 50 mPa.s or less under measuring conditions of a slurry temperature of 20 °C, slurry concentration of 5 % by weight, and rotating speed of 60 rpm, with a Brookfield viscometer Model BLII, Toki Sangyo Co., Ltd., and water to form a dough,
making noodle strings from the dough, and
drying the noodle strings,
wherein the instant swollen dried noodles are free of a powdered or granular oil or fat or emulsifier.

5. The method of producing instant swollen dried noodles according to claim 4, wherein the amount of the crosslinked gelatinized potato starch added is 1 % by weight to 10 % by weight based on the total weight of the main raw material and the crosslinked gelatinized potato starch.

6. The method of producing instant swollen dried noodles according to claim 4 or 5, further comprising filling individual servings of the noodle strings in a mold form.

7. The method of producing instant swollen dried noodles according to any one of the claims 4 to 6, wherein the drying further comprises drying and swelling the noodle strings by using hot air at a temperature of 100 °C to 150 °C and air flow rate of 5 m/s to 25 m/s.

8. The method of producing instant swollen dried noodles according to any one of the claims 4 to 6, wherein the drying further comprises pre-drying the noodle strings until the moisture content of the noodle strings reaches 15 % by weight to 25 % by weight by using hot air at a temperature of 80 °C to 115 °C and air flow rate of 1 m/s to 10 m/s, followed by drying and swelling the noodle strings until the moisture content of the noodle strings reaches 7 % by weight to 14 % by weight by using hot air at a temperature of 100 °C to 150 °C and air flow rate of 5 m/s to 25 m/s.

## Patentansprüche

1. Gequollene, getrocknete Instantnudeln, welche einen Hauptrohstoff aufweist, der ein Weizenmehl und mindestens eine vernetzte, gelatinierte Kartoffelstärke aufweist, die aus der Gruppe ausgewählt worden ist, die eine veretherte, vernetzte, gelatinierte Kartoffelstärke und eine veresterte, vernetzte, gelatinierte Kartoffelstärke umfasst, wobei die Viskosität der vernetzten gelatinierten Kartoffelstärke 50 mPa s oder weniger beträgt unter Messbedingungen einer Aufschlämmungstemperatur von 20 °C, einer Aufschlämmungskonzentration von 5 Gewichtsprozent und einer Drehgeschwindigkeit von 60 U/min mit einem Brookfield-Viskosimeter Modell BLII, Toki Sangyo Co., Ltd. und wobei die gequollenen getrockneten Instantnudeln frei von pulverförmigen oder körnigen Ölen oder Fetten oder Emulgatoren sind.

2. Gequollene, getrocknete Instantnudeln nach Anspruch 1, wobei die Menge der zugesetzten vernetzten, gelatinierten Kartoffelstärke 1 Gewichtsprozent bis 10 Gewichtsprozent, bezogen auf das Gesamtgewicht des Hauptrohstoffs und der vernetzten, gelatinierten Kartoffelstärke, beträgt.

3. Gequollene, getrocknete Instantnudeln nach Anspruch 1 oder 2, wobei die getrockneten Nudeln mittels Heißluft bei einer Temperatur von 100 °C bis 150 °C und einer Luftstromgeschwindigkeit von 5 m/s bis 25 m/s getrocknet und gequollen worden sind.

4. Verfahren zur Herstellung von gequollenen, getrockneten Instantnudeln, welches umfasst:
ein Mischen und ein Kneten eines Hauptrohstoffs, der ein Weizenmehl und mindestens eine vernetzte, gelatinierte Kartoffelstärke aufweist, die aus der Gruppe ausgewählt ist, die eine veretherte, vernetzte, gelatinierte Kartoffelstärke und eine veresterte, vernetzte, gelatinierte Kartoffelstärke mit einer Viskosität von 50 mPa s oder weniger umfasst, unter Messbedingungen einer Aufschlämmungstemperatur von 20 °C, einer Aufschlämmungskonzentration von 5 Gewichtsprozent und einer Drehgeschwindigkeit von 60 U/min mit einem Brookfield-Viskosimeter, Modell BLII, Toki Sangyo Co., Ltd. und Wasser, um einen Teig zu bilden,
ein Herstellen von Nudelsträngen aus dem Teig, und
ein Trocknen der Nudelstränge,
wobei die gequollenen, getrockneten Instantnudeln frei von pulverförmigen oder körnigen Ölen oder Fetten oder Emulgatoren sind.

5. Verfahren zur Herstellung von gequollenen, getrockneten Instantnudeln nach Anspruch 4, wobei die Menge der zugesetzten vernetzten, gelatinierten Kartoffelstärke 1 bis 10 Gewichtsprozent, bezogen auf das Gesamtgewicht des Hauptrohstoffs und der vernetzten, gelatinierten Kartoffelstärke, beträgt.

6. Verfahren zur Herstellung von gequollenen, getrockneten Instantnudeln nach Anspruch 4 oder 5, welches ferner ein Abfüllen einzelner Portionen der Nudelstränge in eine Form umfasst.

7. Verfahren zur Herstellung von gequollenen, getrockneten Instantnudeln nach einem der Ansprüche 4 bis 6, wobei das Trocknen ferner ein Trocknen und ein Quellen der Nudelstränge mittels Heißluft bei einer Temperatur von 100 °C bis 150 °C und einer Luftstromgeschwindigkeit von 5 m/s bis 25 m/s umfasst.

8. Verfahren zur Herstellung von gequollenen, getrockneten Instantnudeln nach einem der Ansprüche 4 bis 6, wobei das Trocknen ferner ein Vortrocknen der Nudelstränge umfasst, bis der Feuchtigkeitsgehalt der Nudelstränge 15 Gewichtsprozent bis 25 Gewichtsprozent erreicht, unter Verwendung von Heißluft bei einer Temperatur von 80 °C bis 115 °C und einer Luftstromgeschwindigkeit von 1 m/s bis 10 m/s, gefolgt von einem Trocknen und einem Quellen der Nudelstränge, bis der Feuchtigkeitsgehalt der Nudelstränge 7 Gewichtsprozent bis 14 Gewichtsprozent erreicht, unter Verwendung von Heißluft bei einer Temperatur von 100 °C bis 150 °C und einer Luftstromgeschwindigkeit von 5 m/s bis 25 m/s.

## Revendications

1. Nouilles séchées gonflées instantanées comprenant une matière première principale comprenant de la farine de blé et au moins un amidon de pomme de terre gélatinisé réticulé choisi dans le groupe constitué d'amidon de pomme de terre gélatinisé réticulé éthérifié et d'amidon de pomme de terre gélatinisé réticulé estérifié, dans lesquelles la viscosité de l'amidon de pomme de terre gélatinisé réticulé est inférieure ou égale à 50 mPa·s dans des conditions de mesure d'une température de suspension concentrée de 20 °C, une concentration de suspension concentrée de 5 % en poids, et une vitesse de rotation de 60 tr/min, avec un viscosimètre Brookfield modèle BLII, Toki Sangyo Co., Ltd., et les nouilles séchées gonflées instantanées étant exemptes d'une huile ou une graisse ou un émulsifiant pulvérulent ou granulaire.

2. Nouilles séchées gonflées instantanées selon la revendication 1, dans lesquelles la quantité de l'amidon de pomme de terre gélatinisé réticulé ajouté est de 1 % en poids à 10 % en poids sur la base du poids total de la matière première principale et de l'amidon de pomme de terre gélatinisé réticulé.

3. Nouilles séchées gonflées instantanées selon la revendication 1 ou 2, les nouilles séchées étant séchées et gonflées au moyen d'air chaud à une température de 100 °C à 150 °C et un débit d'air de 5 m/s à 25 m/s.

4. Procédé de production de nouilles séchées gonflées instantanées, comprenant :
le mélange et le malaxage d'une matière première principale comprenant de la farine de blé, et au moins un amidon de pomme de terre gélatinisé réticulé choisi dans le groupe constitué d'amidon de pomme de terre gélatinisé réticulé éthérifié et d'amidon de pomme de terre gélatinisé réticulé estérifié ayant une viscosité de 50 mPa·s dans des conditions de mesure d'une température de suspension concentrée de 20 °C, une concentration de suspension concentrée de 5 % en poids, et une vitesse de rotation de 60 tr/min, avec un viscosimètre Brookfield modèle BLII, Toki Sangyo Co., Ltd., et de l' pour former une pâte,
la fabrication de ficelles de nouilles à partir de la pâte, et
le séchage des ficelles de nouilles,
dans lequel les nouilles séchées gonflées instantanées sont exemptes d'une huile ou une graisse ou un émulsifiant pulvérulent ou granulaire.

5. Procédé de production de nouilles séchées gonflées instantanées selon la revendication 4, dans lequel la quantité de l'amidon de pomme de terre gélatinisé réticulé ajouté est de 1 % en poids à 10 % en poids sur la base du poids total de la matière principale et de l'amidon de pomme de terre gélatinisé réticulé.

6. Procédé de production de nouilles séchées gonflées instantanées selon la revendication 4 ou 5, comprenant en outre le remplissage de portions individuelles des ficelles de nouilles dans une forme de moule.

7. Procédé de production de nouilles séchées gonflées instantanées selon l'une quelconque des revendications 4 à 6, dans lequel le séchage comprend en outre le séchage et le gonflement des ficelles de nouilles au moyen d'air chaud à une température de 100 °C à 150 °C et un débit d'air de 5 m/s à 25 m/s.

8. Procédé de production de nouilles séchées gonflées instantanées selon l'une quelconque des revendications 4 à 6, dans lequel le séchage comprend en outre le préséchage des ficelles de nouilles jusqu'à ce que la teneur en humidité des ficelles de nouilles atteigne 15 % en poids à 25 % en poids au moyen d'air chaud à une température de 80 °C à 115 °C et un débit d'air de 1 m/s à 10 m/s, suivi du séchage et du gonflement des ficelles de nouilles jusqu'à ce que la teneur en humidité des ficelles de nouilles atteigne 7 % en poids à 14 % en poids au moyen d'air chaud à une température de 100 °C à 150 °C et un débit d'air de 5 m/s à 25 m/s.
